(19) Europäisches Patentamt
European Patent Office
Office européen des brevets

(11) EP 0 824 128 B1

(12) EUROPÄISCHE PATENTSCHRIFT

(45) Veröffentlichungstag und Bekanntmachung des Hinweises auf die Patenterteilung:
**28.04.2004 Patentblatt 2004/18**

(51) Int Cl.7: **C08J 3/09**, C08J 3/26, C10M 171/00

(21) Anmeldenummer: **97113081.0**

(22) Anmeldetag: **30.07.1997**

(54) **Verfahren zur Herstellung von nicht-wässrigen Dispersionen und deren Verwendung**

Process for preparing non-aqueous dispersions and their use

Procédé pour préparer des dispersions non-aqueuses et leur utilisation

(84) Benannte Vertragsstaaten:
**BE DE DK ES FR GB IT LU NL SE**

(30) Priorität: **12.08.1996 DE 19632430**

(43) Veröffentlichungstag der Anmeldung:
**18.02.1998 Patentblatt 1998/08**

(73) Patentinhaber: **Fludicon GmbH**
**64293 Darmstadt (DE)**

(72) Erfinder:
- **Wendt, Eckhard, Dr.**
  **51373 Leverkusen (DE)**
- **Bloodworth, Robert, Dr.**
  **51061 Köln (DE)**
- **Mechtel, Markus, Dr.**
  **50937 Köln (DE)**
- **Klinksiek, Bernd**
  **51429 Bergisch Gladbach (DE)**
- **Halle, Olaf, Dr.**
  **51061 Köln (DE)**

(74) Vertreter: **Behrens, Helmut, Dipl.-Ing.**
**Gross-Gerauer Weg 55**
**64295 Darmstadt (DE)**

(56) Entgegenhaltungen:
**EP-A- 0 101 007**
**EP-A- 0 685 544**
**DE-A- 4 119 670**
**US-A- 5 496 483**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 824 128 B1

Printed by Jouve, 75001 PARIS (FR)

## Beschreibung

Die vorliegende Erfindung betrifft ein Verfahren zur Herstellung von nicht-wäßrigen Dispersionen und deren Verwendung.

Nicht-wäßrige Dispersionen gewinnen zunehmend an Bedeutung. Insbesondere werden sie eingesetzt als elektrorheologische Flüssigkeiten (ERF). Unter elektrorheologischen Flüssigkeiten versteht man Dispersionen von feinteiligen Partikeln in hydrophoben und elektrisch nichtleitenden Ölen. Die scheinbare Viskosität dieser Dispersion ändert sich unter dem Einfluß eines elektrischen Feldes sehr schnell und reversibel vom flüssigen zum plastischen oder festen Zustand. Die scheinbare Viskosität verändert sich sowohl bei elektrischen Gleichfeldern als auch bei Wechselfeldern, wobei der Stromfluß durch die ERF sehr gering sein sollte.

Der Viskositätsanstieg in einer ERF bei Anlegen eines elektrischen Feldes ist qualitativ folgendermaßen zu erklären: Die kolloidchemisch stabilen dispersen Teilchen polarisieren im elektrischen Feld und agglomerieren durch die Dipol-Wechselwirkung in Richtung der Feldlinien. Dieses führt zum Anstieg der scheinbaren Viskosität. Die Agglomerisation ist reversibel, d.h., wird das elektrische Feld abgeschaltet, redispergieren die Teilchen und die Viskosität wird auf den ursprünglichen Wert erniedrigt.

Die elektrische Polarisierbarkeit der dispersen Phase ist somit eine wichtige Voraussetzung für die Ausbildung des elektrorheologischen Effektes. Deshalb werden oft ionisch oder elektronisch leitfähige Materialien als disperse Phase verwendet.

Bei einem Teil der ERF, die dem Stand der Technik entsprechen, besteht die disperse Phase aus organischen Feststoffen, wie z.B. Ionenaustauscherharzen (USA 3 047 507) oder Silikonharzen (US-A 5 164 105). Es wurden aber auch zum Teil beschichtete anorganische Materialien, wie z.B. Zeolithe (US-A 4 744 914) oder Silikagel (US-A 4 668 417), verwendet. Der elektrorheologische Effekt ist bei den genannten Substanzen auf die Beladung der Feststoffe mit Wasser zurückzuführen. Geringe Wasseranteile erhöhen die ionische Leitfähigkeit und somit die für die Ausbildung des Effektes unerläßliche Polarisierbarkeit der dispersen Teilchen. Wasserhaltige Systeme haben jedoch eine geringe Stabilität. Feststoffe wie Metallpulver oder Zeolithe haben den Nachteil, daß sie abrasiv wirken. Der Abrieb kann durch die Wahl der dispersen Phase stark beeinflußt werden. Deshalb sind polymere Substanzen, insbesondere Elastomere, den anorganischen Pulvern als disperse Phase vorzuziehen.

ERF lassen sich überall dort einsetzen, wo es der Übertragung von Kräften mit Hilfe geringer elektrischer Leistung bedarf, wie z.B. in Kupplungen, Hydraulikventilen, Stoßdämpfern, Vibratoren oder Vorrichtungen zum Positionieren und Fixieren von Werkstücken.

Neben den allgemeinen an eine ERF gestellten Anforderungen, wie gute elektrorheologische Effekte, hohe Temperaturstabilität, niedriger Stromverbrauch und chemische Beständigkeit, spielen bei der praktischen Nutzung die Abrasivität, die Grundviskosität und die Absetzstabilität der dispersen Phase eine wichtige Rolle. Die disperse Phase sollte möglichst nicht sedimentieren, sich jedoch in jedem Fall gut redispergieren lassen und auch unter extremer mechanischer Beanspruchung keinen Abrieb verursachen.

Eine effektive elektrorheologische Flüssigkeit sollte daher über eine niedrige Basisviskosität und über eine hohe Viskosität nach Anlegen des elektrischen Feldes, d.h. eine große Viskositätsänderung, verfügen. Bekannterweise steigt der ER-Effekt mit dem Volumanteil der dispersen Phase. Das Erreichen einer geringen Basisviskosität bei hohem Feststoffanteil hängt erstens von der Form sowie der Teilchengrößenverteilung der dispersen Phase und zweitens von der Dispergierwirkung eventuell eingesetzter Dispergierhilfsmittel ab. Zusätzlich hängt die Leitfähigkeit der dispersen Phase von der Teilchengröße ab. Die Optimierung dieser Parameter ist nur im Zusammenhang mit der genauen Einstellung der Teilchengröße bzw. der Teilchengrößenverteilung der dispersen Phase möglich. Herkömmliche Verfahren zur Herstellung von nicht-wäßrigen Dispersionen basieren auf dem Vermahlen von festen Substanzen auf die gewünschte Teilchengröße mit nachfolgender Dispergierung in das Dispersionsmedium. Im US-A 5 268 118 wurde das Sprühtrocknen von Polymerlösungen oder reaktiven Monomermischungen mit nachträglicher Dispergierung der verfestigten Teilchen offenbart. In beiden Verfahren ist die Kontrolle der Teilchengröße und ihre Verteilung nur durch eine kostspielige Klassifizierung und Trennung der anfallenden Teilchen möglich. In der JP-A 57892/92 werden nicht-wäßrige Dispersionen von Polyetherpolymeren beschrieben, die durch Vermahlen und anschließende Dispergierung in nicht-wäßrigen Flüssigkeiten hergestellt wurden. In US-A 5 073 282 wurden hydrophobe Polymerdispersionen durch Fällungspolymerisation in einer nicht polaren Trägerflüssigkeit hergestellt und mit einer zweiten, polaren Flüssigkeiten beladen, um elektrorheologische Flüssigkeiten herzustellen. Hierbei wird die Teilchengröße und deren Verteilung durch die Polarität des Monomers und Lösemitteln bestimmt und ist nur in sehr engen Grenzen variierbar. Es besteht daher ein Bedarf an einem Verfahren zur Herstellung von nicht-wäßrigen Dispersionen, die über einen hohen Anteil an Feststoffen verfügen, die sedimentationsstabil sind, die über eine niedrige Basisviskosität und eine große Viskositätsänderung nach Anlegen des elektrischen Feldes verfügen.

Aufgabe der vorliegenden Erfindung war daher die Bereitstellung eines einfachen Verfahrens, das die Herstellung von nicht-wäßrigen Dispersionen mit diesem Eigenschaftsprofil ermöglicht.

Überraschenderweise wurde nun gefunden, daß nicht-wäßrige Dispersionen mit diesem Eigenschaftsprofil

dadurch hergestellt werden können, daß mindestens ein flüssiges Prepolymer, gegebenenfalls in Anwesenheit einer oder mehrerer leitfähiger Komponenten, in mindestens einer nicht-wäßrigen Flüssigkeit, gegebenenfalls in Anwesenheit eines oder mehrerer Dispergiermittel emulgiert, die Teilchengröße des Prepolymers auf 0,1 bis einschließlich 30 µm und einer Teilchengrößenverteilung

$$U_{90} = \frac{d_{90} - d_{10}}{d_{50}}$$

von kleiner als 2 mittels Strahldispergator eingestellt wird und
die emulgierten Teilchen durch eine chemische Reaktion ausgehärtet werden.

Gegenstand der vorliegenden Erfindung ist daher ein Verfahren zur Herstellung von nicht-wäßrigen Dispersionen, wonach
mindestens ein flüssiges Prepolymer, gegebenenfalls in Anwesenheit einer oder mehrerer leitfähiger Komponenten, in mindestens einer nicht-wäßrigen Flüssigkeit, gegebenenfalls in Anwesenheit eines oder mehrerer Dispergiermittel emulgiert,

- eine Teilchengröße von 0,1 bis einschließlich 30 µm und einer Teilchengrößenverteilung $U_{90} = (d_{90}\text{-}d_{10})/d_{50}$ von kleiner 2 mittels Strahldispergator eingestellt wird und
- die emulgierten Teilchen durch eine chemische Reaktion ausgehärtet werden.

Als flüssige Prepolymere sind alle Substanzen, die über Kondensations-, Additions- und Polymerisationsreaktionen in den festen Zustand überführt werden können oder Mischungen aus flüssigen Prepolymeren mit festen Polymeren, wobei auch diese Mischungen flüssig sind, einsetzbar. Die Überführung in den festen Zustand wird im folgenden Härtung genannt.

Bei den einsetzbaren flüssigen Prepolymeren handelt es sich um Substanzen, wie z.B. Polyether, die eine maximale Viskosität von 30 000 mPa·s aufweisen. Bei den einsetzbaren festen Polymeren handelt es sich um Polymere mit einer Mindestviskosität von mehr als 30 000 mPa·s.

Flüssige Prepolymere sowie feste Polymere können z.B. aus denselben Monomereinheiten zusammengesetzt sein und unterscheiden sich in diesem Fall durch die Viskosität.

Als Prepolymere im Sinne der Erfindung können lineare oder verzweigte Polyether oder Polyester oder deren Copolymerisate eingesetzt werden. Beispiele linearer Polyetheroligomere sind Polyethylenglykole, Polypropylenglykole, Polytetrahydrofuran, statistische Ethylenglykol-Propylenglykol-Copolymere oder auch Ethylenglykol-Propylenglykol-Blockcopolymere, wie sie z.B. unter dem Handelsnamen Pluronik® von der Firma GAF vertrieben werden. Verzweigte Polyetheroligomere sind beispielsweise Tris(polypropylenoxid)ω-olglyzidether oder andere Substanzen, die durch Ethoxylierung oder Propoxylierung von höherfunktionellen Hydroxyverbindungen, wie z.B. Pentaerythrit oder 1,1,1-Trimethylolpropan, erhalten werden. Das Molekulargewicht der Glykole liegt zwischen 62 und 1 000 000, vorzugsweise jedoch zwischen 100 und 10 000. Bevorzugt enthalten die Polyetheroligomere Hydroxygruppen. Sie können aber auch Amin-, Allyl- bzw. Vinylgruppen oder Carboxylgruppen als funktionelle Endgruppen enthalten. Polyethylenoxid- bzw. Polypropylenoxid-Mono- oder -Diamine werden unter dem Handelsnamen Jeffamin® bei der Firma Texaco vertrieben. Beispiele vinylgruppenhaltiger Produkte sind die Ester der Glykole mit entsprechenden Säuren, wie z.B. Acrylsäure. Weitere bevorzugte Polymere sind z.B. die Polyester, die unter anderem durch die Firma Bayer AG unter dem Handelsnamen Desmophen® (z.B. Desmophen® 170 HN, ein Reaktionsprodukt aus Adipinsäure, Neopentylglykol und Hexan-1,6-diol) vertrieben werden. Ebenfalls eingesetzt werden können Monomere mit Hydroxy- (z.B. Trimethylolpropan, Hexan-1,6-diol), Amino- (z.B. Hexan-1,6-diamin), (Meth)acrylat- (z.B. Acrylsäuremethylester), Methacrylamid- (z.B. Acrylamid) oder Vinylgruppen (z.B. Styrol).

Als flüssiges Prepolymer wird vorzugsweise mindestens eine Verbindung eingesetzt, die Hydroxy-, Amino-, (Meth)acrylat-, Methacrylamid- und/oder Vinylgruppen aufweist. Besonders bevorzugt ist der Einsatz eines Prepolymers mit aliphatischen Polyetherketten, wie z.B. trifunktionelles Ethylenglykol, hergestellt durch Ethoxylierung von Trimethylolpropan.

Als nicht-wäßrige Flüssigkeit können z.B. flüssige Kohlenwasserstoffe wie z.B. Paraffine (z.B. n-Nonane), Olefine (z.B. 1-Nonene, (cis, trans) 4-Nonene) und aromatische Kohlenwasserstoffe (z.B. Xylene), Siliconöle wie Polydimethylsiloxane und flüssige Methylphenylsiloxane mit einer Viskosität von 3-300 mPa·s eingesetzt werden. In einer bevorzugten Ausführungsform der Erfindung wird als nicht-wäßrige Flüssigkeit ein Siliconöl eingesetzt. Die nicht-wäßrige Flüssigkeit kann allein oder in Kombination mit anderen nicht-wäßrigen Flüssigkeiten eingesetzt werden. Der Erstarrungspunkt der Flüssigkeit wird vorzugsweise niedriger als -30°C eingestellt, der Siedepunkt vorzugsweise größer als 150°C.

Die Viskosität der nicht-wäßrigen Flüssigkeit liegt bei Raumtemperatur vorzugsweise zwischen 3 und 300

mPa·s. Im allgemeinen sind die nicht-wäßrigen Flüssigkeiten mit einer Viskosität von 3 bis 20 mPa·s zu bevorzugen, weil hiermit eine niedrigere Grundviskosität erreicht wird. Um Sedimentation zu vermeiden, sollte die nicht-wäßrige Flüssigkeit außerdem vorzugsweise eine Dichte haben, die ungefähr der Dichte der ausgehärteten emulgierten Teilchen entspricht. So lassen sich z.B. durch die Verwendung von halogenhaltigen Polysiloxanen, die als Reinsubstanz oder als Gemisch mit anderen Siliconölen eingesetzt werden, nicht-wäßrige Dispersionen herstellen, die trotz einer geringen Basisviskosität auch über Wochen hinaus keine Sedimentation aufweisen.

Besonders geeignet zur Herstellung sedimentationsstabiler, nicht-wäßriger Dispersionen sind als nicht-wäßrige Flüssigkeit fluorhaltige Siloxane der allgemeinen Struktur:

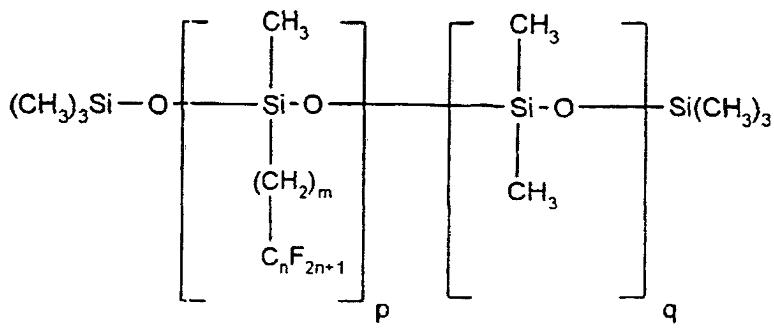

mit

n = 1-10
m = 2-18
p = 1-5 und q = 0-10.

Die Viskosität der nach dem erfindungsgemäßen Verfahren hergestellten nicht-wäßrigen Dispersion beträgt bei Raumtemperatur je nach Zusammensetzung und der Basisviskosität der nicht-wäßrigen Flüssigkeit vorzugsweise zwischen 1 und 1 000 mPa·s, bevorzugt unter 500 mPa·s und besonders bevorzugt unter 250 mPa·s.

Der mittlere Teilchendurchmesser des dispergierten Prepolymers in der erfindungsgemäß eingesetzten nicht-wäßrigen Flüssigkeit wird auf 0,1 und 30 µm, bevorzugt 0,5 und 25 µm und besonders bevorzugt 1 und 20 µm eingestellt.

Die Teilchengrößenverteilung $U_{90}$ wird vorzugsweise auf einen Wert von 1,7 eingestellt. Der Betrag der Teilchengrößenverteilung $U_{90}$ wurde nach der folgenden Formel berechnet:

$$U_{90} = \frac{d_{90}-d_{10}}{d_{50}},$$

wobei

$d_{90}$, $d_{50}$ und $d_{10}$ folgende Bedeutung haben:

$d_{90}$ [µm]: 90 % der Gesamtzahl aller Teilchen haben eine Teilchengröße, die kleiner oder gleich diesem Wert ist.

$d_{50}$ [µm]: 50 % der Gesamtzahl aller Teilchen haben eine Teilchengröße, die kleiner oder gleich diesem Wert ist.

$d_{10}$ [µm]: 10 % der Gesamtzahl aller Teilchen haben eine Teilchengröße, die kleiner oder gleich diesem Wert ist.

Bei dem in dem erfindungsgemäßen Verfahren eingesetzten Strahldispergator kann es sich sowohl um einen einstufigen Strahldispergator gemäß EP-B 0 101 007 als auch um einen mehrstufigen Strahldispergator handeln. In dem mehrstufigen Strahldispergator sollte die Zahl der Düsen vorzugsweise mindestens 2 bis 50 betragen. Der mehrstufige Strahldispergator ist dabei bevorzugt. Beim Einsatz des einstufigen Strahldispergators ist ein 1 bis 25facher

Durchlauf bevorzugt. Die Düsen haben dabei einen Durchmesser von vorzugsweise 0,3 bis 1 mm, besonders bevorzugt 0,5 bis 0,8 mm. Das Verhältnis von Länge zu Durchmesser beträgt vorzugsweise 1 bis 4, vorzugsweise 1,5 bis 2. Mit dieser Dimensionierung beträgt das Volumen der Dispergierzone nur 0,1 $mm^3$ bis 1 $mm^3$. Die Düsen sind entweder so angeordnet, daß der austretende Emulsionsstrahl auf eine feste Wand prallt, oder die Emulsionsstrahlen selbst aufeinanderprallen. Bei der zuletzt genannten Ausführung werden die nach dem Austritt aus den Düsen noch vorhandenen Strömungsenergien durch das Zusammenprallen der Strahlen verbraucht.

Als leitfähige Komponenten werden vorzugsweise solche Substanzen eingesetzt, die in molekularer bzw. ionischer Form im flüssigen Prepolymer löslich oder dispergierbar sind. In einer bevorzugten Form der Erfindung werden als leitfähige Komponenten ein organischer, anorganischer Halbleiter und/oder ein Ionenleiter eingesetzt. Beispiele solcher leitfähigen Komponenten sind z.B. freie Säuren bzw. deren Salze mit Alkali bzw. Erdalkalimetallen oder organischen Kationen. Zu den leitfähigen Komponenten gehören somit Salze wie KCl, $LiNO_3$, $CH_3COONa$, $LiClO_4$, $Mg(ClO_4)_2$, KSCN, $ZnCl_2$, LiCl, LiBr, LiI, $LiBF_4$, $LiPF_6$, $NaB(C_6H_5)_4$, $LiCF_3SO_3$ und $N(C_2H_4)_4Cl$. Weiterhin können als leitfähige Komponente organische oder anorganische Halbleiter eingesetzt werden, die eine Affinität zum Prepolymer besitzen. Beispiele hierfür sind Kohlenstoffpartikel, Polyanilin, Polyanilinderivate, Polythiophen und dessen Derivate sowie Polyacenchinone.

Als Dispergiermittel können in der nicht-wäßrigen Flüssigkeit lösliche Tenside eingesetzt werden, die z.B. von Amiden, Imidazolinen, Oxazolinen, Alkoholen, Glykol oder Sorbitol abgeleitet sind. Auch können im Dispersionsmedium lösliche Polymere eingesetzt werden. Geeignet sind z.B. Polymere, die 0,1 bis 10 Gew.-% N und/oder OH sowie 25 bis 83 Gew.-% $C_4$-$C_{24}$-Alkylgruppen enthalten und ein Molekulargewicht im Bereich von 5 000 bis 1 000 000 aufweisen. Die N- und OH-haltigen Verbindungen in diesen Polymeren können z.B. Amin-, Amid-, Imid-, Nitril-, 5- und/oder 6-gliedrige N-haltige heterocyclische Ringe, bzw. Alkohole sein und die $C_4$-$C_{24}$-Alkylgruppenester von Acryl- oder Methacrylsäure enthalten. Beispiele für die genannten N- und OH-haltigen Verbindungen sind N,N-Dimetyhlaminoethylmethacrylat, tert.-Butylacrylamid, Maleinimid, Acrylnitril, N-Vinylpyrrolidon, Vinylpyridin und 2-Hydroxyethylmethacrylat. Die vorgenannten polymeren Dispergiermittel haben gegenüber den niedermolekularen Tensiden im allgemeinen den Vorteil, daß die hiermit hergestellten Dispersionen bezüglich des Absetzverhaltens stabiler sind. Zudem einsetzbar sind Polysiloxan-Polyether-Copolymere der folgenden beispielhaften Zusammensetzung:

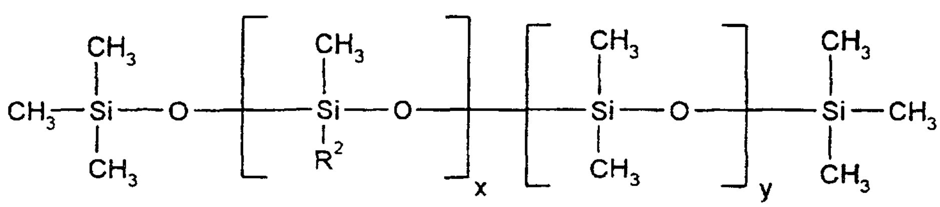

mit $R^2$ unabhängig voneinander

$-CH_3$ oder

$-(CH_2)_o-O-(C_2H_4O)_r-(C_3H_6O)_s-O-R^4$

mit

o = 0 - 3

r = 0 - 50

s = 0 - 50,

x = 1 - 5,

y = 1 - 50,

wobei die Verteilung der Ethylenoxid- und Propylenoxideinheiten blockweise oder statistisch, bevorzugt statistisch, und auch in der gegenüber der angegebenen Formel umgekehrten Reihenfolge vorliegen kann und

$R^4$ = H, Alkyl ist.

Bevorzugt ist die Kombination von o = 3, r:s = 0,80 bis 1,23, $R^4$ = H mit

x = 1 - 5 und

y = 1 - 50.

Entsprechende Produkte sind beispielsweise unter dem Handelsnamen "Tegopren"® bei der Firma GOLDSCHMIDT AG verfügbar.

Neben den Polyether-Polysiloxanen können auch organofunktionelle Siloxane der Formel

$$R^1_a R^2_b Si(OR^3)_z O_{\left[\frac{4-a-b-z}{2}\right]}$$

als Dispergiermittel eingesetzt werden, die als einheitlicher Stoff oder auch als Gemisch aus mindestens 2 verschiedenen Arten von Organopolysiloxanen vorliegen können, mit

$R^1$ = $C_1$-$C_{18}$-Alkyl und/oder Phenyl, vorzugsweise Methyl,
$R^2$= gleiche oder verschiedene SiC-gebundene organofunktionelle Reste, wie z.B.
$-CH_2CH_2NH_2$,
$-CH_2CH_2CH_2NH_2$,
$-(CH_2)_5NH_2$,

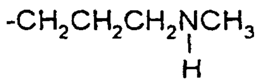 ,

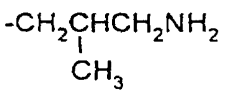 ,

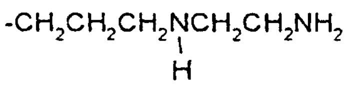 ,

$-(CH_2)_3(NHCH_2CH_2)_2NH_2$,

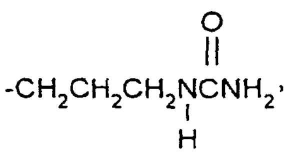 ,

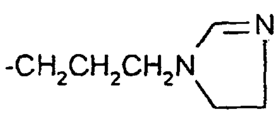 ,

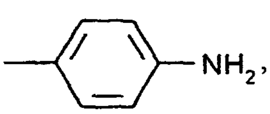 ,

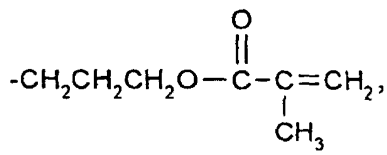

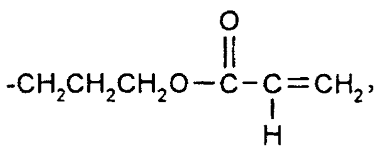

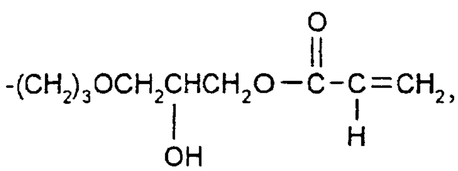

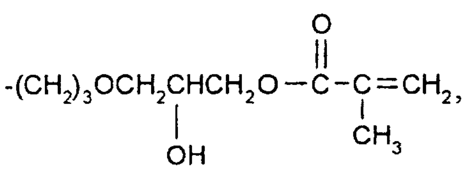

$-CH_2CH_2SH$ und/oder
$-CH=CH_2$,

mit

$R^3$ = $C_1$-$C_{18}$-Alkyl, Phenyl und/oder H,

$a + b + z \leq 4$ und
a, b unabhängig voneinander 0 bis 2,33 und
z = 0 bis 2.

Die organofunktionellen Siloxane weisen vorzugsweise ein durchschnittliches Molekulargewicht von ≥1 400 auf, wobei
a und b unabhängig voneinander 0 bis 2,04 und z = 0 bis 1,04 ist.

In einer besonders bevorzugten Ausführungsform ist das durchschnittliche Molekulargewicht ≥3 800,
a = 1,95 - 2,00
b = 0,002 - 0,048 und
z = 0,008 - 0,039, wobei statistisch gesehen nur eine funktionelle SiC-gebundene Gruppe pro Molekül vorliegt.

Von den aufgeführten Resten sind der 3-Aminopropyl- und der N-Amino-ethyl-3-aminopropyl-Rest besonders bevorzugt.

Dispergiermittel vom Typ Polysiloxan-Polyether oder organofunktionelle Polysiloxane lassen sich einzeln, aber auch als Gemisch aus beliebig vielen Komponenten einsetzen.

Ebenfalls einsetzbar sind Dispergiermittel gemäß US-A 4 757 106 oder US-A 5 300 237.

Als Dispergiermittel sind Reaktivdispergiermittel bevorzugt. Reaktivdispergiermittel weisen funktionelle Gruppen auf, die eine chemische Verknüpfung mit der Teilchenoberfläche des Prepolymers ermöglichen. Die Art der funktionellen Gruppen richtet sich nach der Chemie der Härtungsreaktion. Bei diesen handelt es sich vorzugsweise um

die Reaktionsprodukte aus OH-funktionellen Polydimethylsiloxanen mit Aminopropyltriethoxysilan und/oder das Umsetzungsprodukt aus Octamethylcyclotetrasiloxan mit N-(β-Aminoethyl-γ-aminopropyl)-methyldiethoxysilan.

Zum Aushärten der emulgierten Teilchen wird vorzugsweise mindestens ein Härter eingesetzt, der jedoch auf die Funktionalität des Prepolymers abgestimmt sein muß. Härter im Sinne der Erfindung sind Reaktivkomponenten, Initiatoren und/oder Katalysatoren. Beispiele für Härter bei Prepolymeren mit Hydroxyund/oder Aminogruppen sind z. B. di- oder multifunktionelle Isocyanate. Isocyanate unterschiedlicher Struktur werden unter dem Handelsnamen Desmodur® durch die Firma Bayer AG vertrieben. Bei Verwendung von hydroxy- und/oder aminofunktionalisierten Prepolymeren ist als Härter Toluylen-Diisocyanat bevorzugt. Zur Härtung von hydroxy- und/oder aminofunktionalisierten Prepolymeren sind jedoch auch die in der Siliconchemie gängigen Acetat-, Amin-, Benzamid-, Oxim- und Alkoxyvernetzer einsetzbar. Für die Härtung von Allyl-, bzw. Vinyl-, Acryl- bzw. Methacryl-Gruppen modifiziertem Prepolymer sind radikalische Härter geeignet. Beispiele hierfür sind organische Azoverbindungen, wie Azo-bisisobutyronitril oder Peroxide, wie Benzoylperoxid.

Zusätzliche Prepolymere sowie Härter können vor, während oder nach der Einstellung der Teilchengröße und -verteilung den emulgierten Teilchen der Emulsion zugeführt werden. Die einsetzende chemische Reaktion führt durch Abreagieren der funktionellen Gruppen des flüssigen Prepolymers zum Molekulargewichtsaufbau in den Emulsionströpfchen und/oder auch zur Reduzierung der Zahl der funktionellen Gruppen. Vorzugsweise werden bis zu 10 % der Gesamtmenge an einzusetzendem Härter vor dem Dispergieren dem Strahldispergator zugesetzt.

Durch die chemische Reaktion bilden sich aus dem flüssigen Prepolymer viskose oder feste Teilchen, deren kugelförmige Geometrie während und nach der Reaktion erhalten bleibt.

In den nach dem erfindungsgemäßen Verfahren hergestellten nicht-wäßrigen Dispersionen beträgt der Feststoffanteil, d.h. die Gesamtmenge an flüssigem Prepolymer, Dispergiermittel und Härter sowie von gegebenenfalls vorhandenen leitfähigen Komponenten, vorzugsweise bis zu 75 %, besonders bevorzugt 30 bis 70 %, ganz besonders bevorzugt 40 bis 60 %. Dabei beträgt die Menge der leitfähigen Komponente, falls vorhanden, 0,05 bis 5 Gew.-% und die Menge an Dispergiermittel 0 bis 10 %. Die Menge des Härters ergibt sich aus der Anzahl der funktionellen Gruppen im flüssigen Prepolymer. Bei Härtung durch Polyaddition oder Polykondensation ist das Verhältnis von funktionellen Gruppen im flüssigen Prepolymer zu den funktionellen Gruppen im Härter vorzugsweise äquimolar.

Die nach dem erfindungsgemäßen Verfahren hergestellten ausgehärteten emulgierten Teilchen weisen vorzugsweise eine Leitfähigkeit von $10^{-9}$ bis $10^{-6}$ S/cm auf.

In der bevorzugten Ausführungsform des erfindungsgemäßen Verfahrens werden folgende Bestandteile eingesetzt:

- als flüssiges Prepolymer: Polypropylenoxid-Polyethylenoxid-Copolymere, trifunktionelle Polyethylenglykole und/oder Polytetrahydrofuran

- Polydimethylsiloxan als nicht-wäßrige Flüssigkeit

- als Dispergiermittel die Reaktionsprodukte aus OH-endgestoppten Polydimethylsiloxanen mit Aminopropyltriethoxysilan und/oder das Umsetzungsprodukt aus Octamethylcyclotetrasiloxan mit N-(β-Aminoethyl)-γ-aminopropylmethyldiethoxysilan,

- Toluylen-diisocyanat als Härter,

sowie LiCl, $ZnCl_2$ und/oder Ruß als leitfähige Komponente.

Das erfindungsgemäße Verfahren kann mit den zuvor beschriebenen Parametern und Mengenverhältnissen sowohl kontinuierlich als auch diskontinuierlich durchgeführt werden. Besonders bevorzugt ist die kontinuierliche Verfahrensführung.

Nach dem erfindungsgemäßen Verfahren wird vorzugsweise die nicht-wäßrige Flüssigkeit in das flüssige Prepolymer gegebenenfalls gemeinsam mit der leitfähigen Komponente einemulgiert, wobei durch weitere Zugabe der nicht-wäßrigen Flüssigkeit und Durchgang durch den Strahldispergator eine Phasenumkehr erfolgt. Die eingesetzte nicht-wäßrige Flüssigkeit kann dabei Härter und/oder gegebenenfalls Dispergiermittel enthalten. Bei dieser Art der Herstellung entsteht zunächst eine Emulsion, die bei einer bestimmten Menge an nicht-wäßriger Flüssigkeit in eine Doppelemulsion umschlägt. Dabei ist der größte Teil der Phasengrenzfläche bereits vorgebildet. In einer bevorzugten Ausführungsform erfolgt dabei eine mehrstufige Homogenisierung, bei der die Doppelemulsionstropfen aufgeschlossen werden. Die Stabilisierung durch die Emulgatormoleküle ist in dieser Ausführungsform wesentlich erleichtert. Mit dem Strahldispergator als Dispergiervorrichtung gelingt es, nicht-wäßrige Dispersionen definierter Partikelgröße (Einflußgrößen: Druck und Anzahl der Passagen), angepaßt an die Grenzflächen-Belegungskinetik des Emulsionssystems herzustellen.

In einer bevorzugten Ausführungsform wird das flüssige Prepolymer in einem temperierten Kreislaufbehälter

vorgelegt und mit einer Druckerhöhungspumpe über einen ein- oder mehrstufigen Strahldispergator geführt, vorzugsweise rezirkuliert jedoch die nicht-wäßrige Dispersion. Der Druckabfall pro Düse beträgt je nach gewünschter Teilchengröße 1 bis 20 bar. Gleichzeitig wird das Siliconöl als bevorzugte nicht-wäßrige Flüssigkeit mit dem Emulgator eingeleitet und einemulgiert. Die Phasenumkehr kann durch einen Abfall des Homogenisierungsdruckes beobachtet werden. Durch weiteres Rezirkulieren bei definiertem Druckabfall pro Düse wird eine Emulsion definierter Teilchengröße hergestellt. Anschließend kann der Härter mittels Dosierpumpe in einem definierten Mengenstrom eindosiert werden. Der Kreislaufkessel wird dabei vorzugsweise gekühlt, so daß die Temperatur vorzugsweise weniger als 30°C beträgt. Nach beendeter Zugabe wird das Reaktionsgemisch vorzugsweise bis unter 100°C aufgeheizt um die Reaktion zu beenden.

Gegenstand der vorliegenden Erfindung ist zudem die Verwendung der nach dem erfindungsgemäßen Verfahren hergestellten nicht-wäßrigen Dispersion als elektrorheologische Flüssigkeit.

Die nachfolgenden Beispiele dienen der Erläuterung der Erfindung. Die Erfindung ist jedoch nicht auf diese Beispiele beschränkt.

## Ausführungsbeispiele

Die nachfolgend beschriebenen Ausführungsbeispiele 1 bis 4 wurden nach dem erfindungsgemäßen Herstellverfahren mit einem mehrstufigen Strahldispergator in einer diskontinuierlichen Fahrweise hergestellt. Die Voremulsion wurde nach dem Phasenumkehrverfahren erzeugt. Zum Einstellen der Teilchengröße wurde die Voremulsion vor Zugabe des Vernetzers zwei Stunden bei einem definierten Druckabfall pro Strahldispergatordüse homogenisiert. Die Beispiele 5 bis 7 beschreiben das erfindungsgemäße Herstellverfahren in einer kontinuierlichen Fahrweise. Sowohl die Herstellung der Voremulsion nach dem Phasenumkehrverfahren als auch die Einstellung einer gewünschten Teilchengröße und Teilchengrößenverteilung erfolgt in einem Schritt durch das Durchleiten des Massestroms durch einen mehrstufigen Strahldispergator.

Bei den Vergleichsbeispielen 1 und 2 erfolgte die Homogenisierung der Voremulsion entsprechend dem Stand der Technik mittels eines Rotor-Stator-Scherhomogenisators (Ultra-Turrax T 50 der Firma IKA Labortechnik). Die Umlaufgeschwindigkeit des Rotors wurde zwischen 3000 und 9000 U/min variiert.

Der Einfluß des Homogenisierdrucks auf die Teilchengröße und die Teilchengrößenverteilung der nach Beispiel 1 bis 3 hergestellten nicht-wäßrigen Dispersion zeigt Fig. 1. Die Teilchengröße, insbesondere der Grobanteil ($d_{90}$-Wert), nimmt proportional zur Höhe des Homogenisierdrucks ab. Gleichzeitig nimmt die Breite der Teilchengrößeverteilung $U_{90}$ der Dispersion bei Zunahme des Homogenisierdrucks ab. Beide Parameter lassen sich somit bei dem erfindungsgemäßen Verfahren gezielt einstellen.

Die Teilchengröße und die Teilchengrößeverteilung beeinflussen wiederum die Leitfähigkeit und die Absetzstabilität der nicht-wäßrigen Dispersion.

Die Absetzstabilität der nicht-wäßrigen Dispersion wurde mittels eines Zentrifugentests bestimmt. Hierbei wird die maximale Beschleunigung ermittelt, bei der die nicht-wäßrigen Dispersion über eine Dauer von 10 min kein Absetzen erkennen läßt. Ist auch bei einer Untersuchungsdauer von 20 min kein Absetzen zu beobachten, wird die Bewertungszahl durch ein "+" ergänzt.

Vergeben wurden folgende Bewertungen:

Note 1: Absetzstabil über 10 min bei einer Beschleunigung von 184,45 · g
Note 2: Absetzstabil über 10 min bei einer Beschleunigung von 118,05 · g
Note 3: Absetzstabil über 10 min bei einer Beschleunigung von 66,40 · g
Note 4: Absetzstabil über 10 min bei einer Beschleunigung von 29,51 · g
Note 5: Absetzstabil über 10 min bei einer Beschleunigung von 7,38 · g
Note 6: Absetzstabil über 10 min bei einer Beschleunigung von 1,00 · g

Den Einfluß der Teilchengröße und Teilchengrößeverteilung auf die Absetzstabilität und die Leitfähigkeit der nicht-wäßrigen Dispersion bei einer Betriebstemperatur von 90°C und einer angelegten Rechteckwechselspannung von 3 kV, zeigt Tabelle 1.

Die elektrische Leitfähigkeit der nach dem erfindungsgemäßen Verfahren hergestellten Dispersion sinkt mit abnehmender Teilchengröße und enger werdender Teilchengrößenverteilung von 115 $\mu A/cm^2$ bei $d_{90}$ = 9,67 µm und $U_{90}$ = 1,90 auf 29 $\mu A/cm^2$ bei $d_{90}$ = 6,25 µm und $U_{90}$ = 1,49. Gleichzeitig steigt die Absetzstabilität beim Zentrifugentest von drei auf dreiplus. Es stehen somit bei dem erfindungsgemäßen Verfahren über die Herstellparameter Homogenisierdruck und Anzahl der Homogenisierdüsen bzw. Anzahl der Homogenisierschritte zwei Parameter zur Verfügung über die sowohl die Leitfähigkeit der nichtwäßrigen Dispersion als auch deren Absatzstabilität gezielt eingestellt werden kann.

Eine Korngrößenverteilung der nach Beispiel 4 hergestellten nicht-wäßrigen Dispersion zeigt Figur 2. Abgebildet ist die Summe über die Anzahl der Teilchen in % (Q3) gegen die Korngröße in µm. Figur 3 ist eine vergleichbare

Abbildung der nach Vergleichsbeispiel 1 hergestellten nicht-wäßrigen Dispersion. Die nach Vergleichsbeispiel 1 hergestellte nicht-wäßrige Dispersion besitzt die gleiche chemische Zusammensetzung wie die nach Beispiel 4 hergestellte Dispersion. Figur 3 zeigt im Vergleich zu Figur 2 deutlich, daß bei der Herstellung der nicht-wäßrigen Dispersionen nach dem Stand der Technik größere Teilchen in einer breiteren Teilchengrößenverteilung entstehen.

Figur 4 zeigt den Einfluß des Homogenisierdrucks auf die Teilchengröße bei kontinuierlicher Durchführung des erfindungsgemäßen Verfahrens bei den Beispielen 5 bis 7.

Auch bei kontinuierlicher Herstellung kann über den Homogenisierdruck die Teilchengröße gezielt eingestellt werden. Mit zunehmendem Homogenisierdruck nimmt insbesondere der Grobanteil ($d_{90}$) signifikant ab.

In Tabelle 2 sind die Teilchengrößen sowie die Teilchengrößeverteilung, die Leitfähigkeit und die Absetzstabilität der nach Beispiel 4 und den Vergleichsbeispielen 1 und 2 hergestellten nicht-wäßrigen Dispersion gegenübergestellt. Die Teilchengröße, insbesondere der Grobanteil ($d_{90}$-Wert), und die Teilchengrößenverteilung der nach den Vergleichsbeispielen hergestellten nicht-wäßrigen Dispersionen ist deutlich größer bzw. breiter als bei der nach dem erfindungsgemäßen Verfahren nach Beispiel 4 hergestellten nicht-wäßrigen Dispersion. Die Absetzstabilität der Vergleichsbeispiele ist deutlich schlechter als die Absetzstabilität der nach dem erfindungsgemäßen Verfahren nach Beispiel 4 hergestellten Probe. Auch die Leitfähigkeit der Vergleichsbeispiele 1 und 2 ist höher als bei der erfindungsgemäß hergestellten nicht-wäßrigen Dispersion.

Folgende Bestandteile wurden in den folgenden Beispielen und Vergleichsbeispielen eingesetzt:

| | | |
|---|---|---|
| Als nicht-wäßrige Flüssigkeit: | Polydimethylsiloxan (Siliconöl) | |
| (Dispersionsmedium) | Viskosität bei 25°C | 5 $mm^2/s$ |
| | Dichte bei 25°C | 0,9 $g/cm^3$ |
| | Dielektrizitätszahl $\varepsilon_r$ nach DIN 53 483 bei 0°C und 50 Hz | 2,8 |
| Als Prepolymer: | Trifunktionelles Polyethylenglycol mit einem Molekulargewicht von 1015, hergestellt durch Ethoxylierung von Trimethylolpropan | |
| Als Dispergiermittel: | Umsetzungsprodukt aus 40 Teilen Octamethylcyclotetrasiloxan mit 2 Teilen N-(β-Aminoethyl)-γ-aminopropylmethyldiethoxysilan | |
| Als Härter: | Toluylen-Diisocyanat (TDI). | |

**Beispiel 1**

In einem normalen Rührwerkkessel wurden jeweils 12,0 kg Prepolymer zusammen mit 0,012 kg Zinkchlorid unter Zugabe einer Mischung, bestehend aus 13,80 kg nicht-wäßriger Flüssigkeit und 1,20 kg Dispergiermittel, bei einem Vordruck von 60 bar durch den mehrstufigen Strahldispergator im Kreis gepumpt. Hierbei fand die Phasenumkehr statt. Der Druck wurde auf 40 bar nachreguliert. Die Homogenisierzeit betrug 2,5 Stunden. Anschließend wurden zur Voremulsion 2,97 kg TDI dosiert und die Probe in einen separaten beheizbaren Rührwerkkessel überführt. Die Probe wurde anschließend 2 Stunden bei 60°C ausgehärtet.

Die so hergestellte nicht-wäßrige Dispersion zeigte bei 90°C, einer angelegten Rechteck-Wechselspannung von 3 kV und einer Frequenz von 50 Hz einen elektrorheologischen Effekt $\tau$ von $\geq$ 1200 Pa.

Die exakten physikalischen Daten und die Meßergebnisse der nicht-wäßrigen Dispersion sind in Tabelle 1 aufgeführt.

**Beispiel 2**

Herstellung gemäß Beispiel 1, jedoch bei einem Homogenisierdruck von 45 bar. Die so hergestellte nicht-wäßrige Dispersion zeigte bei 90°C, einer angelegten Rechteck-Wechselspannung von 3 kV und einer Frequenz von 50 Hz einen elektrorheologischen Effekt $\tau$ von $\geq$ 1200 Pa.

Die exakten physikalischen Daten und die Meßergebnisse der nicht-wäßrigen Dispersion sind in Tabelle 1 aufgeführt.

**Beispiel 3**

Herstellung gemäß Beispiel 1, jedoch bei einem Homogenisierdruck von 50 bar. Die so hergestellte nicht-wäßrige Dispersion zeigte bei 90°C, einer angelegten Rechteck-Weckselspannung von 3 kV und einer Frequenz von

50 Hz einen elektrorheologischen Effekt $\tau$ von $\geq$ 1200 Pa.

Die exakten physikalischen Daten und die Meßergebnisse der nicht-wäßrigen Dispersion sind in Tabelle 1 aufgeführt.

**Tabelle 1:** Einfluß des Emulgierdrucks auf die Teilchengröße, die Teilchengrößeverteilung, die Absetzstabilität und die Leitfähigkeit der gemäß den Beispielen 1 bis 3 hergestellten nicht-wäßrigen Dispersionen

| Nicht-wäßrige Dispersion gemäß | Druck [bar] | Teilchengröße $d_{10}$ [µm] | Teilchengröße $d_{50}$ [µm] | Teilchengröße $d_{90}$ [µm] | Teilchengrößenverteilung $U_{90}$ $\frac{d_{90} - d_{10}}{d_{50}}$ | Absetzstabilität (Zentrifugentest) | Stromdichte bei 3 KV/mm T = 90°C J[µA/cm$^2$] |
|---|---|---|---|---|---|---|---|
| Beispiel 1 | 40 | 1,86 | 4,11 | 9,67 | 1,90 | 3 | 115 |
| Beispiel 2 | 45 | 1,54 | 3,51 | 7,46 | 1,69 | 3 | 31 |
| Beispiel 3 | 50 | 1,58 | 3,15 | 6,25 | 1,49 | 3 + | 29 |

**Beispiel 4**

Herstellung gemäß Beispiel 1, jedoch wurden anstatt $ZnCl_2$ 0,021 kg Lithiumchlorid eine Härtermenge von 3,06 kg TDI zugegeben. 150 g der Härtermenge wurden vor dem Homogenisieren zur Voremulsion gegeben.
Die so hergestellte nicht-wäßrige Dispersion zeigte bei 60°C, einer angelegten Rechteck-Wechselspannung von 3 kV und einer Frequenz von 50 Hz einen elektrorheologischen Effekt $\tau$ von ≥ 2400 Pa.
Die exakten physikalischen Daten und die Meßergebnisse der nicht-wäßrigen Dispersion sind in Tabelle 2 aufgeführt.

**Beispiel 5 (kontinuierliche Herstellung)**

Zu einem Massestrom von 47,81 kg/h einer Mischung, bestehend aus 100 Gew.-Teilen Prepolymer und 0,18 Gew.-Teilen Lithiumchlorid, wurden 1. ein Massestrom von 39,97 kg/h einer Mischung, bestehend aus 100 Gew.-Teilen Siliconöl als nicht-wäßrige Flüssigkeit und 2,65 Gew.-Teilen Dispergiermittel, und 2. ein Massestrom von 0,61 kg/h Härter dosiert. Bei einem Druck von 60 bar wurde die Voremulsion unter Phasenumkehr durch einen mehrstufigen Strahldispergator geleitet. Anschließend wurde zur Emulsion über einen Mischer ein Massestrom von 9,69 kg/h Härter dosiert. In einem beheizbaren Rührwerkkessel wurde die nicht-wäßrige Dispersion eine Stunde bei 80°C ausgehärtet.
Die so hergestellte nicht-wäßrige Dispersion zeigte bei 60°C, einer angelegten Rechteck-Wechselspannung von 3 kV und einer Frequenz von 50 Hz einen elektrorheologischen Effekt $\tau$ von ≥ 2300 Pa.

**Beispiel 6**

Herstellung gemäß Beispiel 5, jedoch bei einem Druck von 70 bar.
Die so hergestellte nicht-wäßrige Dispersion zeigte bei 60°C, einer angelegten Rechteck-Wechselspannung von 3 kV und einer Frequenz von 50 Hz einen elektrorheologischen Effekt $\tau$ von ≥ 2300 Pa.

**Beispiel 7**

Herstellung gemäß Beispiel 5, jedoch bei einem Druck von 80 bar.
Die so hergestellte nicht-wäßrige Dispersion zeigte bei 60°C, einer angelegten Rechteck-Weckselspannung von 3 kV und einer Frequenz von 50 Hz einen elektrorheologischen Effekt $\tau$ von ≥ 2300 Pa.

**Vergleichsbeispiel 1**

In einem Becherglas mit einem Nennvolumen von 400 ml wurden 59,5 g Prepolymer zusammen mit 0,105 g Lithiumchlorid vorgelegt. Durch Zugabe einer Mischung, bestehend aus 73,65 g Siliconöl als nicht-wäßrige Flüssigkeit und 1,3 g Dispergiermittel und anschließendem Homogenisieren mit einem Rotor-Stator-Scherhomogenisator (Ultra-Turrax T50 der Firma IKA Labortechnik) für die Dauer von einer Minute bei 3000 U/min wurde eine Voremulsion erzeugt. Anschließend wurden 15,3 g Härter zugegeben. Die reaktive Mischung wurde dann 30 Sekunden bei 6000 U/min homogenisiert und nachträglich 12 Stunden bei 50°C ausgehärtet.
Die so hergestellte nicht-wäßrige Dispersion zeigte bei 60°C, einer angelegten Rechteck-Wechselspannung von 3 kV und einer Frequenz von 50 Hz einen elektrorheologischen Effekt $\tau$ von ≥ 2300 Pa.
Die exakten physikalischen Daten und die Meßergebnisse der nicht-wäßrigen Dispersion sind in Tabelle 2 aufgeführt.

**Vergleichsbeispiel 2**

Herstellung gemäß Vergleichsbeispiel 1, jedoch wurde die Voremulsion eine Minute bei 9000 U/min homogenisiert.
Die so hergestellte nicht-wäßrige Dispersion zeigte bei 60°C, einer angelegten Rechteck-Wechselspannung von 3 kV und einer Frequenz von 50 Hz einen elektrorheologischen Effekt $\tau$ von ≥ 2300 Pa.
Die exakten physikalischen Daten und die Meßergebnisse der nicht-wäßrigen Dispersion sind in Tabelle 2 aufgeführt.

**Tabelle 2**: Vergleich der Teilchengrößen, der Teilchengrößeverteilung, der Absetzstabilität und der elektrischen Leitfähigkeit einer nach dem erfindungsgemäßen Verfahren und nach den Vergleichsbeispielen 1 bis 3 hergestellten nicht-wäßrigen Dispersion

| Nicht-wäßrige Dispersion gemäß | Teilchengröße $d_{10}$ [µm] | Teilchengröße $d_{50}$ [µm] | Teilchengröße $d_{90}$ [µm] | Teilchengrößenverteilung $U_{90} = \frac{d_{90} - d_{10}}{d_{50}}$ | Absetzstabilität (Zentrifugentest) | Stromdichte bei 3 KV/mm T = 60°C J[µA/cm²] |
|---|---|---|---|---|---|---|
| Beispiel 4 | 1,37 | 3,38 | 6,79 | 1,60 | 3+ | 90 |
| Vergleichsbeispiel 1 | 1,31 | 5,43 | 16,81 | 2,86 | 5+ | 162 |
| Vergleichsbeispiel 2 | 1,16 | 3,87 | 13,07 | 3,0 | 4 | 242 |

## Patentansprüche

1. Verfahren zur Herstellung von nicht-wäßrigen Dispersionen, **dadurch gekennzeichnet, daß** mindestens ein flüssiges Prepolymer, gegebenenfalls in Gegenwart einer oder mehrerer leitfähiger Komponenten, in mindestens einer nicht-wäßrigen Flüssigkeit, gegebenenfalls in Anwesenheit eines oder mehrerer Dispergiermittel emulgiert, eine Teilchengröße von 0,1 bis einschließlich 30 µm und eine Teilchengrößenverteilung $U_{90}$ von kleiner 2 mittels Strahldispergator eingestellt wird und die emulgierten Teilchen durch eine chemische Reaktion ausgehärtet werden.

2. Verfahren nach Anspruch 1, **dadurch gekennzeichnet, daß** als flüssiges Prepolymer mindestens eine Verbindung eingesetzt wird, die Hydroxy-, Amino-, (Meth)acrylat-, Methacrylamid- und/oder Vinylgruppen aufweist.

3. Verfahren nach einem der Ansprüche 1 oder 2, **dadurch gekennzeichnet, daß** als nicht-wäßrige Flüssigkeit ein Siliconöl eingesetzt wird.

4. Verfahren nach einem oder mehreren der Ansprüche 1 bis 3, **dadurch gekennzeichnet, daß** der mittlere Teilchendurchmesser des dispergierten Prepolymers auf 1 bis 20 µm eingestellt wird.

5. Verfahren nach einem oder mehreren der Ansprüche 1 bis 4, **dadurch gekennzeichnet, daß** als Strahldispergator ein mehrstufiger Strahldispergator eingesetzt wird.

6. Verfahren nach einem oder mehreren der Ansprüche 1 bis 5, **dadurch gekennzeichnet, daß** die ausgehärteten emulgierten Teilchen eine Leitfähigkeit von $10^{-9}$ bis $10^{-6}$ S/cm aufweisen.

7. Verfahren nach einem oder mehreren der Ansprüche 1 bis 6, **dadurch gekennzeichnet, daß** als leitfähige Komponente ein organischer, anorganischer Halbleiter und/oder ein Ionenleiter eingesetzt wird.

8. Verfahren nach einem oder mehreren der Ansprüche 1 bis 7, **dadurch gekennzeichnet, daß** als Dispergiermittel ein Reaktivdispergiermittel eingesetzt wird.

9. Verfahren nach einem oder mehreren der Ansprüche 1 bis 8, **dadurch gekennzeichnet, daß** als Dispergiermittel die Reaktionsprodukte aus OH-endgestoppten Polydimethylsiloxanen und Aminopropyltriethoxysilan und/oder das Umsetzungsprodukt aus Octamethylcyclotetrasiloxan mit N-(β-Aminoethyl-γ-aminopropyl)-methyldiethoxysilan eingesetzt werden.

10. Verfahren nach einem oder mehreren der Ansprüche 1 bis 9, **dadurch gekennzeichnet, daß** zum Aushärten der emulgierten Teilchen mindestens ein Härter eingesetzt wird.

11. Verfahren nach Ansprüchen 1 bis 10, **dadurch gekennzeichnet, daß** bis zu 10 % der Gesamtmenge an einzusetzendem Härter vor dem Dispergieren dem Strahldispergator zugesetzt werden.

12. Verfahren nach einem oder mehreren der Ansprüche 1 bis 11, **dadurch gekennzeichnet, daß** die folgenden Bestandteile eingesetzt werden:

    - als flüssiges Prepolymer: Polypropylenoxid-Polyethylenoxid-Copolymere, trifunktionelle Polyethylenglykole und/oder Polytetrahydrofuran,
    - Polydimethylsiloxan als nicht-wäßrige Flüssigkeit,
    - als Dispergiermittel die Reaktionsprodukte aus OH-funktionellen Polydimethylsiloxanen mit Aminopropyltriethoxysilan und/oder das Umsetzungsprodukt aus Octamethylcyclotetrasiloxan mit N-(β-Aminoethyl)-γ-aminopropylmethyldiethoxysilan,
    - Toluylen-diisocyanat als Härter und
    - LiCl, $ZnCl_2$ und/oder Ruß als leitfähige Komponente.

13. Verfahren nach einem oder mehreren der Ansprüche 1 bis 12, **dadurch gekennzeichnet, daß** flüssiges Prepolymer, Dispergiermittel und Härter sowie gegebenenfalls leitfähige Komponente in einer Gesamtmenge von 40 bis

60 Gew.-% eingesetzt werden

**14.** Verfahren nach einem oder mehreren der Ansprüche 1 bis 13, **dadurch gekennzeichnet, daß** die nicht-wäßrige Flüssigkeit in das flüssige Prepolymer emulgiert wird und durch weitere Zugabe der nicht-wäßrigen Flüssigkeit und Durchgang durch den Strahldispergator eine Phasenumkehr erfolgt.

**15.** Verwendung der nach einem oder mehreren der Ansprüche 1 bis 14 hergestellten nicht-wäßrigen Dispersion als elektrorheologische Flüssigkeit.

**Claims**

**1.** A method for preparing non-aqueous dispersions, **characterised in that** at least one liquid prepolymer, optionally in the presence of one or more conductive components, emulsifies in at least one non-aqueous liquid, optionally in the presence of one or more dispersing agents, adjustment is made to a particle size of 0.1 up to and including 30µm and a particle-size distribution $U_{90}$ of less than 2 with the use of jet dispersers, and the emulsified particles are hardened in a chemical reaction.

**2.** A method according to Claim 1, **characterised in that** at least one compound having hydroxy, amino, (meth) acrylate, methacrylamide and/or vinyl groups is used as the liquid prepolymer.

**3.** A method according to one of Claims 1 or 2, **characterised in that** a silicone oil is used as the non-aqueous liquid.

**4.** A method according to one or more of Claims 1 to 3, **characterised in that** the mean particle diameter of the dispersed prepolymer is adjusted to 1 to 20 µm.

**5.** A method according to one or more of Claims 1 to 4, **characterised in that** a multiple-stage jet disperser is used as the jet disperser.

**6.** A method according to one or more of Claims 1 to 5, **characterised in that** the hardened, emulsified particles have a conductivity of $10^{-9}$ to $10^{-6}$ S/cm.

**7.** A method according to one or more of Claims 1 to 6, **characterised in that** an organic or inorganic semiconductor and/or an ionic conductor is used as the conductive component.

**8.** A method according to one or more of Claims 1 to 7, **characterised in that** a reactive dispersing agent is used as the dispersing agent.

**9.** A method according to one or more of Claims 1 to 8, **characterised in that** the reaction products of OH end-terminated polydimethylsiloxanes and aminopropyltriethoxysilane and/or the conversion product of octamethylcyclotetrasiloxane with N-(β-aminoethyl)-γ-aminopropyl methyl diethoxysilane are used as dispersing agents.

**10.** A method according to one or more of Claims 1 to 9, **characterised in that** at least one hardener is used to harden the emulsified particles.

**11.** A method according to one or more of Claims 1 to 10, **characterised in that** up to 10% of the total quantity of hardeners to be used is added to the jet disperser prior to dispersion.

**12.** A method according to one or more of Claims 1 to 11, **characterised in that** the following components are used:

- as the liquid prepolymer: polypropylene oxide-polyethylene oxide copolymers, trifunctional polyethylene glycols and/or polytetrahydrofuran,

- polydimethylsiloxane as the non-aqueous liquid,

- as the dispersing agents: the reaction products of OH-functional polydimethylsiloxanes with aminopropyltriethoxysilane and/or the conversion product of octamethylcyclotetrasiloxane with N-(β-aminoethyl)-γ-aminopropyl methyl diethoxysilane,

- toluylene diisocyanate as the hardener, and
- LiCl, $ZnCl_2$ and/or carbon black as conductive components.

**13.** A method according to one or more of Claims 1 to 12, **characterised in that** liquid prepolymer, dispersing agents and hardeners, as well as any conductive component, are used in a total quantity of 40 to 60 wt.-%.

**14.** A method according to one or more of Claims 1 to 13, **characterised in that** the non-aqueous liquid is emulsified in the liquid prepolymer and a phase inversion occurs as a result of further addition of the non-aqueous liquid and passage through the jet dispenser.

**15.** Use of the non-aqueous dispersion prepared according to one or more of Claims 1 to 14 as an electrorheological fluid.

## Revendications

**1.** Procédé de préparation de dispersions non aqueuses, **caractérisé en ce qu'**au moins un prépolymère liquide, le cas échéant en présence d'un ou de plusieurs composants conducteurs, est émulsifié dans au moins un liquide non aqueux, le cas échéant en présence d'un ou de plusieurs agents dispersants, qu'une taille de particules de 0,1 à 30 μm compris et une répartition granulométrique $U_{90}$ de moins de 2 sont réglées au moyen d'un disperseur à jet et les particules émulsifiées sont durcies par une réaction chimique.

**2.** Procédé selon la revendication 1, **caractérisé en ce que** comme prépolymère liquide est utilisé au moins un composé qui contient des groupes hydroxyle, amine, (méth)acrylate, méthacrylamide et / ou vinyle.

**3.** Procédé selon l'une quelconque des revendications 1 ou 2, **caractérisé en ce qu'**une huile de silicone est utilisée comme liquide non aqueux.

**4.** Procédé selon l'une quelconque ou plusieurs des revendications 1 à 3, **caractérisé en ce que** la taille moyenne des particules du prépolymère dispersé est réglée à 1 à 20 μm.

**5.** Procédé selon l'une quelconque ou plusieurs des revendications 1 à 4, **caractérisé en ce qu'**un disperseur à jet multiétagé est utilisé comme disperseur à jet.

**6.** Procédé selon l'une quelconque ou plusieurs des revendications 1 à 5, **caractérisé en ce que** les particules émulsifiées durcies ont une conductivité de $10^{-9}$ à $10^{-6}$ S/cm.

**7.** Procédé selon l'une quelconque ou plusieurs des revendications 1 à 6, **caractérisé en ce qu'**un semi-conducteur organique ou inorganique et / ou un conducteur ionique sont utilisés comme composants conducteurs.

**8.** Procédé selon l'une quelconque ou plusieurs des revendications 1 à 4, **caractérisé en ce qu'**un agent dispersant réactif est utilisé comme agent dispersant.

**9.** Procédé selon une ou plusieurs des revendications 1 à 8, **caractérisé en ce que** les produits de réaction de polydiméthylsiloxanes à terminaisons OH avec des aminopropyltriéthoxysilanes et / ou le produit de transformation de l'octaméthylcyclotétrasiloxane avec le N-(β-aminoéthyl)-γ-aminopropylméthyldiéthoxysilane sont utilisés comme agents dispersants.

**10.** Procédé selon une ou plusieurs des revendications 1 à 9, **caractérisé en ce qu'**au moins un durcisseur est utilisé pour le durcissement des particules émulsifiées.

**11.** Procédé selon les revendications 1 à 10, **caractérisé en ce que** jusqu'à 10 % de la quantité totale du durcisseur à employer sont ajoutés dans le disperseur à jet avant la dispersion.

**12.** Procédé selon l'une quelconque ou plusieurs des revendications 1 à 11, **caractérisé en ce que** les composants suivants sont utilisés :

comme prépolymère liquide : copolymères poly(oxyde de propylène), poly(oxyde d'éthylène), polyéthylèneglycols trifonctionnels et / ou polytétrahydrofurannes,

le polydiméthylsiloxane comme liquide non aqueux,

comme agents dispersants les produits de réaction de polydiméthylsiloxanes OH-fonctionnels avec des aminopropyltriéthoxysilanes et / ou le produit de transformation de l'octaméthylcyclotétrasiloxane avec le N-(β-aminoéthyl)-γ-aminopropylméthyldiéthoxysilane,

le diisocyanate de toluylène comme durcisseur et

LiCl, $ZnCl_2$ et / ou du noir de fumée comme composants conducteurs.

**13.** Procédé selon une ou plusieurs des revendications 1 à 12, **caractérisé en ce que** le prépolymère liquide, l'agent dispersant et le durcisseur, de même que, le cas échéant, les composés conducteurs, sont utilisés en une quantité totale de 40 à 60 % en poids.

**14.** Procédé selon l'une quelconque ou plusieurs des revendications 1 à 13, **caractérisé en ce que** le liquide non aqueux est émulsifié dans le prépolymère liquide et **en ce qu'**une inversion des phases se produit lors de la poursuite de l'addition du liquide non aqueux et du passage à travers le disperseur à jet.

**15.** Utilisation de la dispersion non aqueuse préparée selon une ou plusieurs des revendications 1 à 14 comme liquide électrorhéologique.

Fig. 1

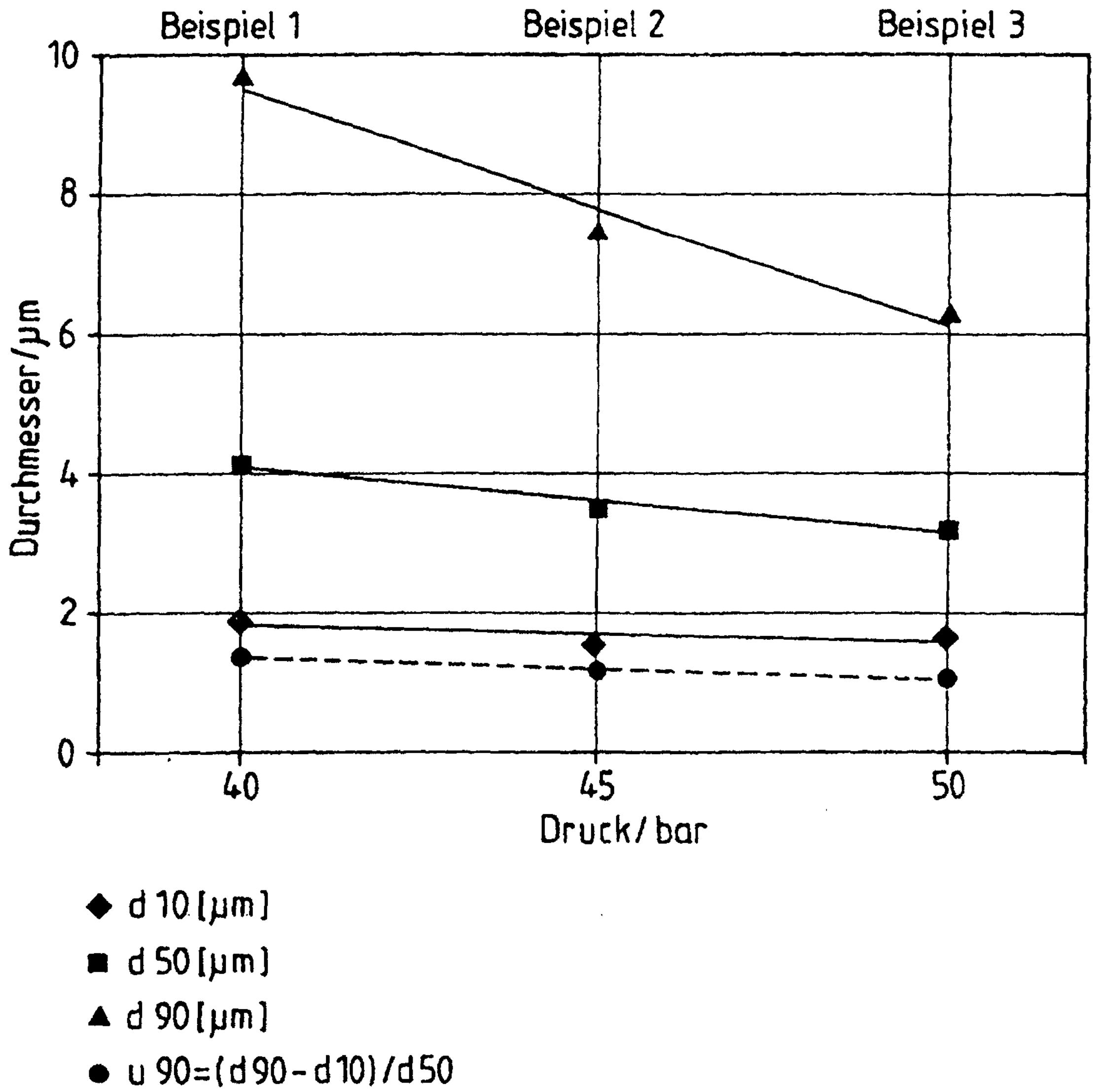
Beispiel 1
Beispiel 2
Beispiel 3
10
8
6
4
2
0
Durchmesser/µm
40
45
50
Druck/bar
d 10 [µm]
d 50 [µm]
d 90 [µm]
u 90=(d90-d10)/d50

g. 2

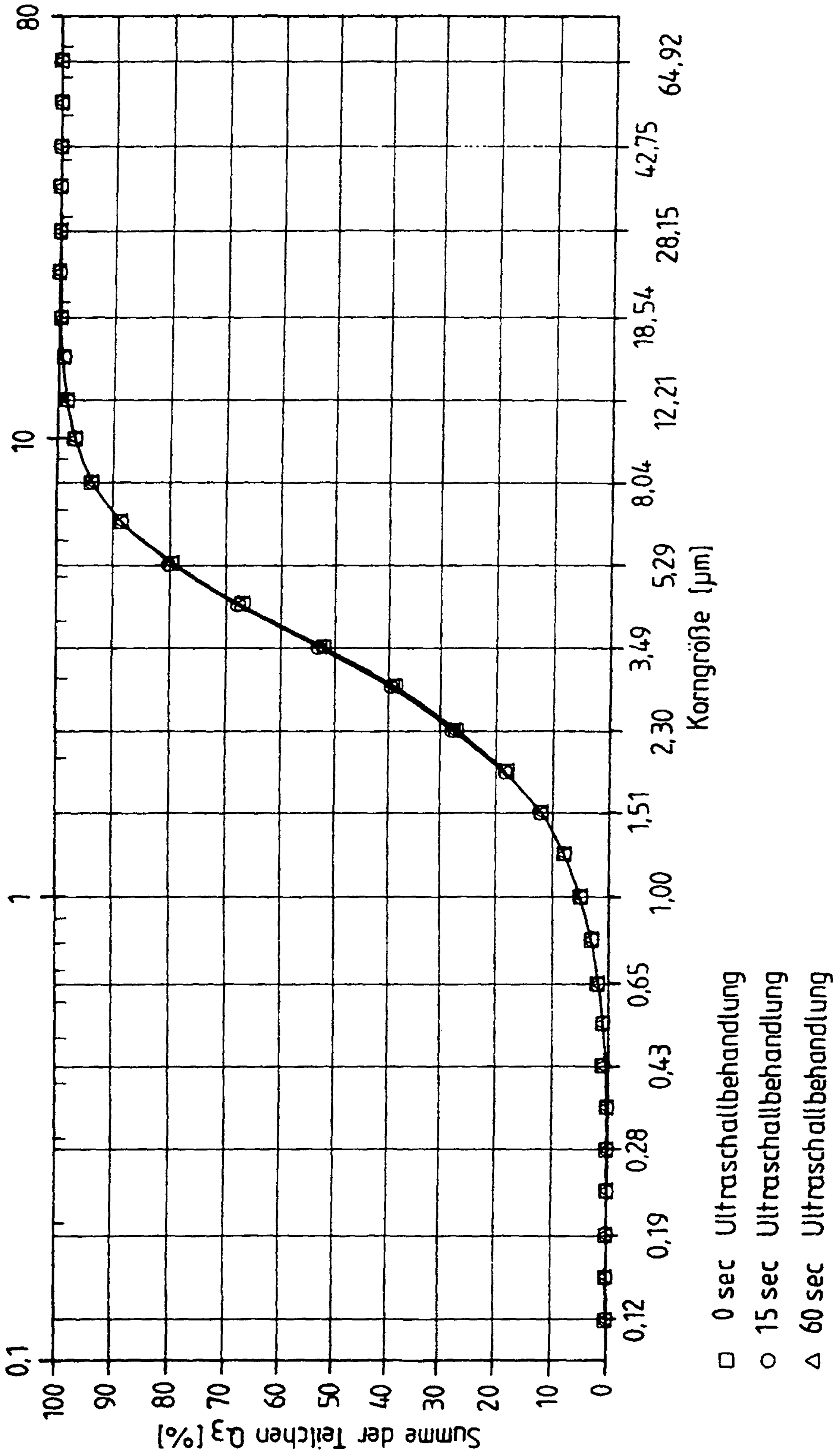
Summe der Teilchen $Q_3$ [%]
100
90
80
70
60
50
40
30
20
10
0
0,1
1
10
80
0,12
0,19
0,28
0,43
0,65
1,00
1,51
2,30
3,49
5,29
8,04
12,21
18,54
28,15
42,75
64,92
Korngröße [µm]
□ 0 sec Ultraschallbehandlung
○ 15 sec Ultraschallbehandlung
△ 60 sec Ultraschallbehandlung

Fig. 3

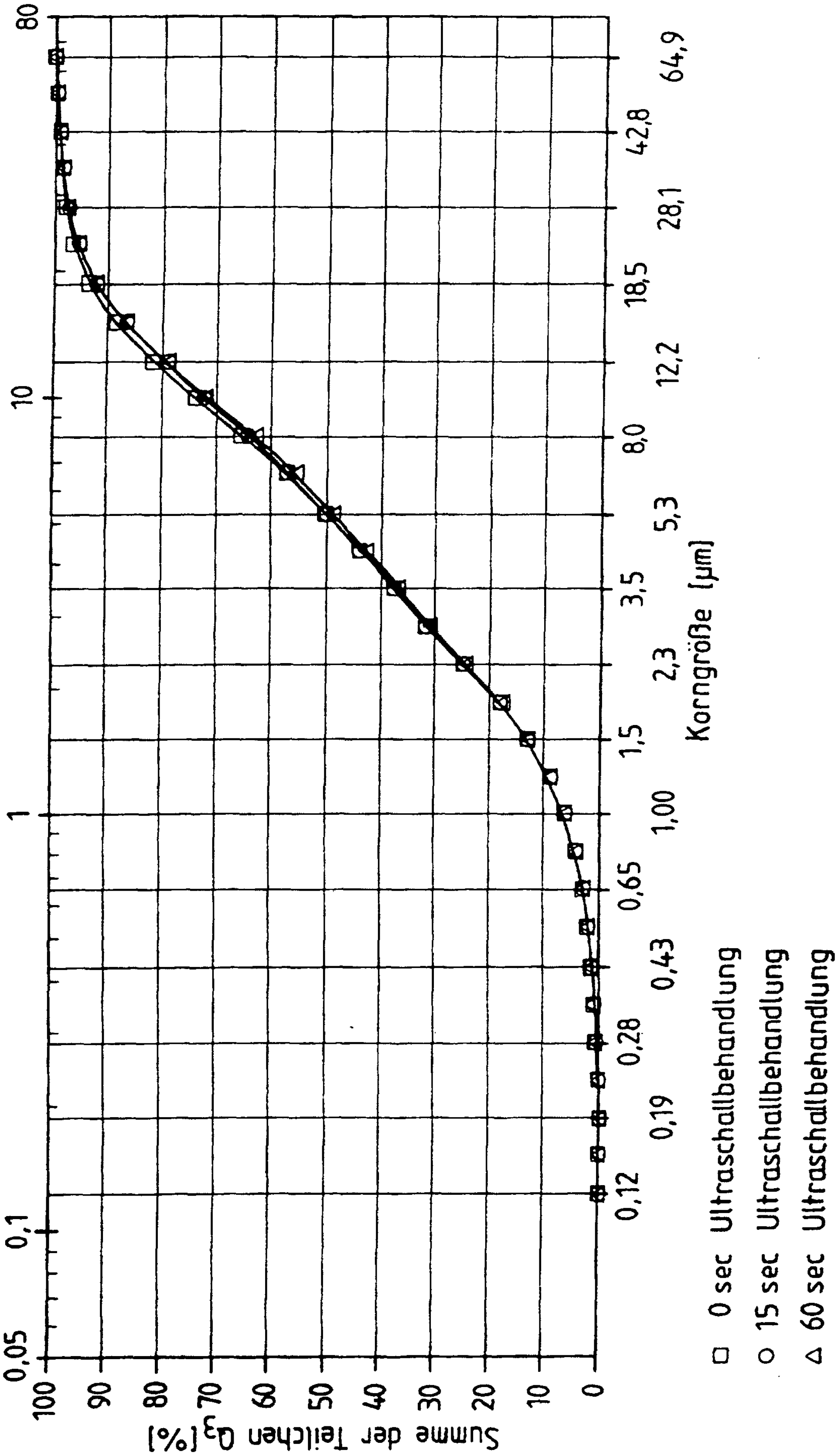
Summe der Teilchen $Q_3$ [%]
100
90
80
70
60
50
40
30
20
10
0
0,05
0,1
1
10
80
0,12
0,19
0,28
0,43
0,65
1,00
1,5
2,3
3,5
5,3
8,0
12,2
18,5
28,1
42,8
64,9
Korngröße [µm]
□ 0 sec Ultraschallbehandlung
○ 15 sec Ultraschallbehandlung
△ 60 sec Ultraschallbehandlung

Fig. 4

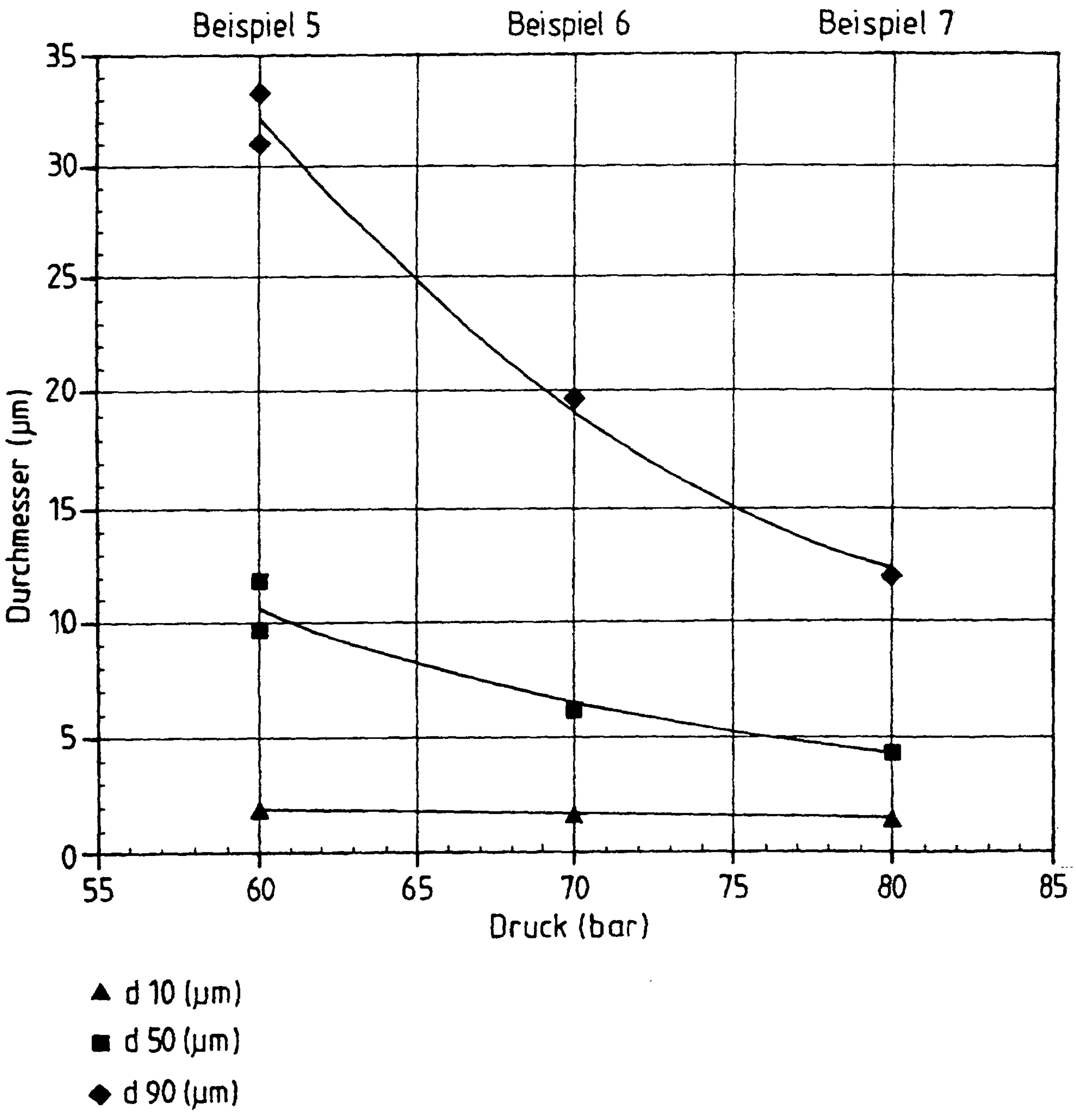
Beispiel 5
Beispiel 6
Beispiel 7
Durchmesser (µm)
35
30
25
20
15
10
5
0
55
60
65
70
75
80
85
Druck (bar)
▲ d 10 (µm)
■ d 50 (µm)
◆ d 90 (µm)